# DEMANDE DE BREVET EUROPEEN

(11) **EP 2 332 765 A1**
(43) Date de publication de la demande: **15.06.2011**
(21) Numéro de dépôt: 10191304.4
(22) Date de dépôt: 16.11.2010
(51) Int. Cl.: B60K 15/04

(54) **Dispositif détrompeur pour goulot de remplissage**

(30) Priorité: 11.12.2009 FR 0958861
(71) Demandeur: Infiplast, 01100 Oyonnax (FR)
(72) Inventeur: Berthonneau, Olivier, 01500, AMBERIEU EN BUGEY (FR)
(74) Mandataire: Maureau, Philippe

(57) **Abrégé**

La présente invention a pour objet un dispositif détrompeur (1) pour goulot de remplissage (2) d'un réservoir de carburant pour véhicule automobile diesel destiné à empêcher l'introduction au travers du goulot (2) d'un pistolet distributeur d'une dimension inférieure à une dimension minimale de référence, caractérisé en ce qu'il comprend au moins un volet mobile (6) entre une première position dans laquelle un passage (2a) du goulot (2) est au moins partiellement occulté et une seconde position dans laquelle le passage (2a) du goulot (2) est libéré, un premier et un second moyen d'actionnement (4), chaque moyen d'actionnement comprenant une partie de contact (3) et une partie de blocage (4c) mobile entre une position de blocage et une position de déblocage de l'au moins un volet mobile (6), le mouvement de l'au moins un volet mobile (6) vers sa seconde position étant autorisé seulement lorsque la partie de blocage (4c) des premiers moyens d'actionnement (4) et la partie de blocage (4c) des seconds moyens d'actionnement (4) sont en position de déblocage de l'au moins un volet mobile (6).

## Description

La présente invention a pour objet un dispositif détrompeur pour goulot de remplissage d'un réservoir de carburant pour véhicule automobile diesel destiné à empêcher l'introduction au travers du goulot d'un pistolet distributeur d'essence de plus petit diamètre qu'un pistolet distributeur de gasoil.

Il est connu d'utiliser différents dispositifs détrompeurs dans les stations services et sur les véhicules automobiles pour minimiser le risque d'erreur de carburant durant le remplissage d'un réservoir de véhicule automobile, comme par exemple des couleurs différentes de pistolet, un diamètre différent des pistolets ou l'application dans l'habitacle et/ou sur la face intérieure de la trappe à carburant d'une étiquette rappelant le carburant à utiliser.

A cet effet, il est connu du document US 2006/032552 A1 de disposer d'un dispositif détrompeur destiné à empêcher l'introduction au travers du goulot d'un pistolet distributeur d'une dimension inférieure à une dimension minimale de référence.

Cependant, la faible résistance conférée par ce dispositif à l'introduction d'un pistolet de diamètre non désiré diminue sa fiabilité.

Malgré cela, il arrive encore que des erreurs soient commises durant la phase de remplissage du réservoir.

Cela peut en partie s'expliquer par l'amélioration considérable des moteurs diesel qui tendent à se rapprocher des caractéristiques des moteurs essences notamment en matière de puissance mais surtout de bruit qui était caractéristique des moteurs diesel il y a encore quelques années. Ces erreurs peuvent également s'expliquer par la multiplication de l'utilisation de différentes voitures comme dans le cas de la location de voiture ou bien tout simplement par un manque d'attention du conducteur lors du remplissage du réservoir.

Si le fait d'introduire un peu de gasoil dans un réservoir d'essence n'a que peu de conséquences sur la mécanique, l'inverse peut cependant se révéler catastrophique, surtout sur des motorisations diesel récentes où le gasoil fait également fonction de lubrifiant pour la pompe à injection.

La présente invention a pour but de résoudre tout ou partie des inconvénients mentionnés ci-dessus en empêchant l'introduction d'un pistolet d'essence dans le goulot de remplissage d'un réservoir de véhicule automobile diesel.

A cet effet, la présente invention a pour objet un dispositif détrompeur pour goulot de remplissage d'un réservoir de carburant pour véhicule automobile diesel destiné à empêcher l'introduction au travers du goulot d'un pistolet distributeur d'une dimension inférieure à une dimension minimale de référence, caractérisé en ce qu'il comprend au moins un volet mobile entre une première position dans laquelle un passage du goulot est au moins partiellement occulté et une seconde position dans laquelle le passage du goulot est libéré, un premier et un second moyen d'actionnement, chaque moyen d'actionnement comprenant une partie de contact faisant saillie dans un passage du goulot de remplissage et destinée à entrer en contact avec un pistolet distributeur introduit dans le goulot et une partie de blocage coopérant avec l'au moins un volet mobile, la partie de blocage étant mobile entre une position de blocage de l'au moins un volet mobile dans la première position de celui-c lorsque la partie de contact n'est pas sollicitée par un pistolet distributeur, et une position de déblocage de l'au moins un volet mobile lorsque la partie de contact est sollicitée par un pistolet distributeur, au moins un premier moyen de rappel élastique tendant à ramener l'au moins un volet vers sa seconde position dans lequel le passage du goulot est libéré, la partie de contact des premiers moyens d'actionnement et la partie de contact des seconds moyens d'actionnement étant disposées dans le goulot de façon à être séparées d'une distance sensiblement égale à la dimension minimale de référence, et le mouvement de l'au moins un volet mobile vers sa seconde position étant autorisé seulement lorsque la partie de blocage du premier moyen d'actionnement et la partie de blocage du second moyen d'actionnement sont en position de déblocage de l'au moins un volet mobile.

Cette disposition permet d'empêcher l'introduction d'un pistolet d'une dimension inférieure à la dimension d'un pistolet de distribution de gasoil, et notamment d'un pistolet de distribution d'essence, dans le goulot de remplissage d'un véhicule diesel en n'autorisant l'ouverture de l'au moins un volet que si les deux parties de contact sont actionnées. Ainsi, l'utilisateur ne peut pas ouvrir l'au moins un volet en appuyant sur une seule des parties de contact avec la surface latérale extérieure du pistolet essence.

Selon un mode de réalisation, les deux parties de contact sont sensiblement diamétralement opposées dans le goulot de remplissage.

Cette disposition permet d'éviter une insertion de travers du pistolet.

Selon le même mode de réalisation, l'au moins un premier moyen élastique est un ressort de traction.

Selon un mode de réalisation, le dispositif comprend des seconds moyens de rappels élastiques tendant à ramener les parties de blocage vers leur position de blocage.

Cette disposition permet de disposer de moyens de rappels de raideurs différentes pour les parties de blocage et pour les volets.

Selon le même mode de réalisation, les seconds moyens élastiques sont des ressorts de compression à lamelle.

Selon un mode de réalisation, les parties de blocage sont agencées pour entraîner l'au moins un volet mobile de sa seconde position vers sa première position.

Selon un mode de réalisation, les parties de blocage comprennent chacun au moins une portion inclinée par rapport à la direction de mouvement de l'au moins un volet mobile, et constituant une came pour une portion de l'au moins un volet mobile constituant un suiveur de came mis au contact avec la came.

Cette disposition permet une ouverture et une fermeture progressive de l'au moins un volet lors de l'introduction ou du retrait du pistolet.

Selon un mode de réalisation, les parties de blocage comprennent chacun au moins une portion comprenant une surface venant au contact d'une surface de l'au moins un volet mobile dans sa première position, et constituant une gâche de verrou pour une portion de l'au moins un volet mobile constituant un pêne de verrou.

Cette disposition rend difficile l'actionnement des parties de blocage dans le cas où un utilisateur essaierait par l'intermédiaire d'un pistolet de faire passer directement l'au moins un volet de sa première position à sa seconde position sans actionner les deux parties de contact ou une seule.

Selon un mode de réalisation, les moyens d'actionnement sont mobiles en rotation autour d'un axe.

Cette disposition permet aux moyens d'actionnement d'accompagner le mouvement du pistolet lors de son introduction dans le goulot de remplissage.

Selon un mode de réalisation, l'au moins un volet est mobile en translation.

Cette disposition permet de résister davantage à une introduction forcée du pistolet dans le goulot de remplissage.

Selon un mode de réalisation, l'extrémité des deux parties de contact est biseautée dans le sens d'introduction du pistolet dans le goulot.

Cette disposition permet de faciliter l'introduction du pistolet dans le goulot de remplissage.

Selon un mode de réalisation, l'extrémité des deux parties de contact présente une forme en arc de cercle dont le rayon de courbure est sensiblement le même que la circonférence du pistolet distributeur de gasoil.

Cette disposition permet de minimiser l'usure des parties de contact lors de la répétition des diverses phases d'introduction et de retrait du pistolet du goulot de remplissage du réservoir durant la durée de vie du véhicule.

Selon un mode de réalisation, le dispositif comporte deux volets mobile, le premier et le second moyen d'actionnement comportant une partie de blocage coopérant avec le premier et le second volet mobile, la partie de blocage étant mobile entre une position de blocage du premier et du second volet mobile dans la première position de ceux-ci lorsque la partie de contact n'est pas sollicitée par un pistolet distributeur, et une position de déblocage du premier et du second volet mobile lorsque la partie de contact est sollicitée par un pistolet distributeur, le mouvement du premier et du second volet mobile vers sa seconde position étant autorisé seulement lorsque la partie de blocage du premier moyen d'actionnement et la partie de blocage du second moyen d'actionnement sont en position de déblocage du premier et du second volet mobile.

De toute façon, l'invention sera bien comprise à l'aide de la description qui suit, en référence au dessin schématique annexé représentant, à titre d'exemples, un mode de réalisation du dispositif selon l'invention.
La figure 1 montre une vue en coupe de face d'un goulot de remplissage équipé du dispositif selon l'invention dans sa position de repos.
La figure 2 montre une coupe transversale partielle du goulot de remplissage de la figure 1 suivant une coupe A - A illustré à la figure 1.
La figure 3 est une vue de détail sur une partie du dispositif.

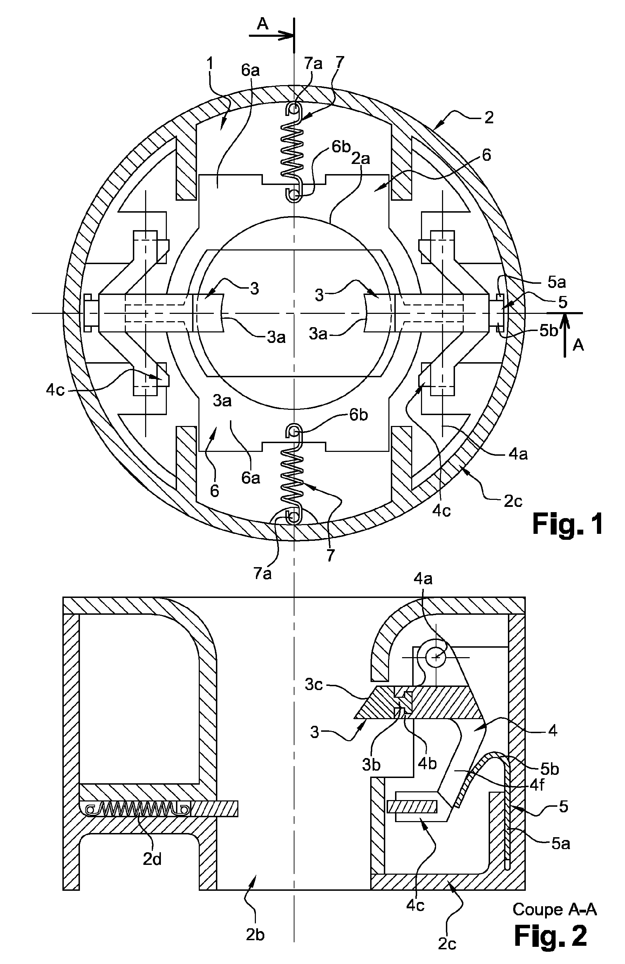

Comme illustré à la figure 1, le dispositif 1 selon l'invention est monté sur un goulot de remplissage 2 d'un réservoir de gasoil de véhicule automobile.

Ce goulot 2 comprend un corps 2c et un passage 2a d'introduction du pistolet débouchant sur une conduite 2b d'acheminement du gasoil vers le réservoir.

Dans le mode de réalisation présenté, ce dispositif détrompeur 1 comprend deux parties de contact 3, deux moyens d'actionnement 4 et deux volets mobiles 6.

Les deux parties de contact 3 se situent sensiblement de façon diamétralement opposées l'une à l'autre dans le passage 2a de profil circulaire du goulot de remplissage 2.

Chaque partie de contact 3 possède une première extrémité 3a faisant saillie dans le passage 2a et une seconde extrémité 3b visible à la figure 2 reliée à une autre portion 4b d'un moyen d'actionnement 4.

Pour pouvoir être actionnées en même temps, chacune des parties de contact 3 fait saillie dans le passage 2a d'une distance supérieure au diamètre du passage 2a du goulot 2, typiquement 26,5 mm à laquelle on retire le diamètre du pistolet distributeur de gasoil dont la valeur est typiquement de 26 mm.

L'extrémité 3a est biseautée selon le sens d'introduction du pistolet dans le passage 2a du goulot de remplissage 2 et l'arrête de l'extrémité 3a se trouvant le plus en saillie dans le passage 2a est usinée en arc de cercle avec un rayon de courbure sensiblement égal à celui de la circonférence d'un pistolet de gasoil.

L'extrémité 3b est reliée par complémentarité de forme à une autre portion 4b du moyen d'actionnement 4 par une tête en forme de « T » formant l'extrémité 3b s'emboitant dans un évidement formé dans la portion 4b du moyen d'actionnement 4.

Chaque moyen d'actionnement 4 est monté en rotation autour d'un axe 4a transversal à la direction d'introduction et de retrait du pistolet dans le passage 2a du goulot 2, ledit axe 4a étant situé à proximité de la portion 4b supportant une partie de contact 3.

Un moyen d'actionnement 4 s'étend longitudinalement selon la direction de la conduite 2b et comprend une partie de blocage 4c en forme de « V » disposée transversalement au passage 2a du goulot 2.

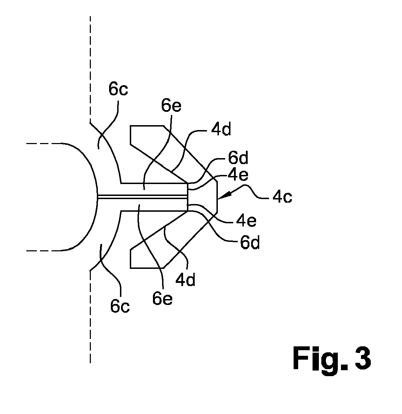

Cette partie de blocage 4c est montrée à la figure 3 et comprend deux portions 4d s'étendant chacune selon un plan parallèle à l'axe de rotation 4a. Ces deux portions 4d comportent chacune une surface inclinée par rapport à l'axe de rotation 4a du moyen d'actionnement 4 et à la direction d'introduction et de retrait du pistolet dans le passage 2a du goulot 2. Ces deux surfaces correspondent aux faces intérieures du « V ».

La partie de blocage 4c comporte également deux portions 4e attenantes comprenant chacune une surface parallèle à l'axe de rotation 4a du moyen d'actionnement 4 correspondant à une portion d'une face intérieure des branches d'un « V » créé par un aplatissement du « V » au niveau du point de convergence de ses deux branches.

Le moyen d'actionnement 4 est maintenu en position à l'aide d'un ressort à lamelle 5 comportant deux branches s'étendant de part et d'autre d'un coude 5b, l'une des branches étant insérée dans le corps 2c du goulot 2 pour y être maintenu fixe et l'autre branche prenant appui sur une portion 4f du moyen d'actionnement 4 selon une direction transversale à celle de l'axe 4a soutenant le moyen d'actionnement 4.

Dans une position de blocage de la partie de blocage 4c de chacun des moyens d'actionnement 4 dans laquelle il n'est pas introduit de pistolet dans le goulot 2, chacune des portions 4e de chacun des deux moyens d'actionnement 4 est au contact d'une surface plane rectangulaire d'une portion 6e de forme parallélépipédique d'un des deux volets 6. Cette surface plane de la portion 6e est sensiblement parallèle à et de même hauteur que la surface de la portion 4e du moyen d'actionnement 4 sur laquelle elle prend appui.

Cette surface s'étend jusqu'à une arête 6d venant coïncider en position de repos avec une ligne d'interface entre une surface parallèle à l'axe de rotation 4a de la portion 4e d'un moyen d'actionnement 4 et une surface inclinée adjacente d'une portion 4d du même moyen d'actionnement 4.

Chaque volet 6 comprend deux portions 6e maintenues chacune par un bras 6c à un corps 6a du volet 6 de forme rectangulaire, chacune de ces deux portions 6e étant continuellement au contact d'un moyen d'actionnement 4 différent.

En position de blocage, une portion 6f du corps 6a d'un volet 6 fait saillie dans le passage 2a du goulot 2. Dans cette position, l'écart séparant les portions 6f des deux volets 6 n'excède pas le diamètre d'un pistolet distributeur d'essence qui est de 21 mm, typiquement cet écart est de 18 mm.

Le corps 6a comprend également un trou 6b pour la fixation de l'extrémité d'un ressort de traction 7 dont l'autre extrémité est reliée à un autre trou de fixation 7a disposé dans le corps fixe 2a du goulot 2.

Chacun des deux volets 6 est guidé en translation à l'intérieur de glissières 2d ménagées dans le corps 2c du goulot 2

En position de déblocage de la partie de blocage 4c de chacun des moyens d'actionnement 4, c'est-à-dire lorsqu'un utilisateur introduit dans le passage 2a du goulot 2 un pistolet distributeur de gazoil, l'écart entre les deux parties de contact 3 est tel que le pistolet actionne obligatoirement les deux parties de contact 3.

Chacun des deux parties de contact 3 va alors pivoter autour de son axe 4a à l'encontre de la force exercée par leur ressort à lamelle 5 respectif.

La partie de blocage 4c en « V » de chacun des moyens d'actionnement 4 va alors avoir tendance à s'éloigner des portions 6e de chacun des volets mobiles 6.

Le ressort de traction 7 de chacun des volets 6 agit alors pour maintenir au contact les portions 6e du volet mobile 6 sur lequel il agit, à l'encontre de la partie de blocage 4c en « V » des deux moyens d'actionnement 4.

La surface plane rectangulaire de chacune des portions 6e des volets mobiles 6 passe ainsi d'une position de blocage dans laquelle la surface plane rectangulaire des portions 6e des volets mobiles 6 est au contact de la surface parallèle à l'axe de rotation 4a des portions 4e des moyens d'actionnement 4 à une position de déblocage dans laquelle l'arête 6d des portions 6e des volets mobiles 6 rentre en contact glissant avec frottement sur la surface inclinée des portions 4d des moyens d'actionnement 4.

A cet effet, les portions 4e des moyens d'actionnement 4 peuvent être assimilées à une gâche pour les portions 6e des volets mobiles 6 qui peuvent alors être assimilées à un pêne de verrou dans la position de blocage de la partie de blocage 4c de chacun des moyens d'actionnement 4.

De la même façon, les portions 4d des moyens d'actionnement peuvent être assimilées à une came en rotation autour de l'axe 4a entrainant en translation les arêtes 6d des portions 6e des volets mobiles 6 qui peuvent alors être assimilées à un suiveur de came dans la position de déblocage de la partie de blocage 4c de chacun des moyens d'actionnement 4.

L'écart des portions 6f du corps 6a des volets mobiles 6, typiquement de 18mm, peut être réduit en fonction du débattement maximum qu'autorisent les moyens d'actionnement 4 et de la pente des cames 4d. Plus il y a de pente dans les cames 4d et plus la partie de blocage 4c du moyen d'actionnement 4 est éloignée de l'axe 4a de rotation alors plus il y aura de débattement du volet mobile 6 mais aussi plus petite sera la composante de la force exercée sur le suiveur de came 6d du volet 6 par la came 4d du moyen d'actionnement 4 pour ramener le volet 6 en position de blocage.

Maintenant, en considérant le cas où il serait introduit un pistolet distributeur d'essence au travers du passage 2a du goulot 2, celui-ci peut soit passer directement entre les deux parties de contact 3, auquel cas il vient directement buter contre les deux volets 6, ou bien suivant la manière dont l'utilisateur introduit le pistolet, celui-ci peut actionner tout au plus une seule partie de contact 3, auquel cas un moyen d'actionnement 4 comprimera le ressort à lamelle 5 agissant à son encontre et la partie de blocage 4c en « V » du moyen d'actionnement 4 s'éloignera d'une première pêne 6e de chacun des deux volets 6.

Cependant, ceux-ci ne pourront pas se déplacer en translation dans leur glissière 2d respective sous l'action de leur ressort 7 respectif et suivre les cames 4d du moyen d'actionnement 4 actionné car les deux gâches 4e qui n'ont pas été actionnées, maintiennent en position les deux volets 6 par leur deuxième pêne 6e respective.

Bien que l'invention ait été décrite en liaison avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention.

Ainsi, il peut être envisagé de prévoir des volets 6 mobiles en rotation autour d'un axe, cette mobilité étant rendue possible grâce à une inclinaison différente des cames 4d, de prévoir des rouleaux libres en rotation autour d'un axe qui prendraient la fonction de suiveur de came 6d à la place de l'arête 6d de la portion 6e des volets mobiles 6, ou bien de supprimer les gâches 4e et de ne conserver que les cames 4d sur les parties de blocage 4c en « V » des moyens d'actionnement 4, les cames 4d étant suffisantes pour maintenir les volets mobiles 6 en position de repos dans laquelle ils sont fermés.

Il peut également être envisagé que les volets mobiles 6 ne passent dans leur seconde position que sous l'action du pistolet, les parties de blocage 4c étant dans leur position de déblocage.

## Revendications

1. Dispositif détrompeur (1) pour goulot de remplissage (2) d'un réservoir de carburant pour véhicule automobile diesel destiné à empêcher l'introduction au travers du goulot (2) d'un pistolet distributeur d'une dimension inférieure à une dimension minimale de référence, **caractérisé en ce qu'**il comprend :
- au moins un volet mobile (6) entre une première position dans laquelle un passage (2a) du goulot (2) est au moins partiellement occulté et une seconde position dans laquelle le passage (2a) du goulot (2) est libéré,
- un premier et un second moyen d'actionnement (4), chaque moyen d'actionnement comprenant une partie de contact (3) faisant saillie dans un passage (2a) du goulot de remplissage (2) et destinée à entrer en contact avec un pistolet distributeur introduit dans le goulot (2) et une partie de blocage (4c) coopérant avec l'au moins un volet mobile (6), la partie de blocage (4c) étant mobile entre une position de blocage de l'au moins un volet mobile (6) dans la première position de celui-ci lorsque la partie de contact (3) n'est pas sollicitée par un pistolet distributeur, et une position de déblocage de l'au moins un volet mobile (6) lorsque la partie de contact est sollicitée par un pistolet distributeur,
- au moins un premier moyen de rappel élastique (7) tendant à ramener l'au moins un volet (6) vers sa seconde position dans lequel le passage (2a) du goulot (2) est libéré,
la partie de contact (3) des premiers moyens d'actionnement (4) et la partie de contact des seconds moyens d'actionnement (4) étant disposées dans le goulot (2) de façon à être séparées d'une distance sensiblement égale à la dimension minimale de référence, et
le mouvement de l'au moins un volet mobile (6) vers sa seconde position étant autorisé seulement lorsque la partie de blocage (4c) du premier moyen d'actionnement (4) et la partie de blocage (4c) du second moyen d'actionnement (4) sont en position de déblocage de l'au moins un volet mobile (6).

2. Dispositif (1) selon la revendication 1 dans lequel les deux parties de contact (3) sont sensiblement diamétralement opposées dans le goulot de remplissage (2).

3. Dispositif (1) selon l'une des revendications précédentes comprenant des seconds moyens de rappels (5) élastiques tendant à ramener les parties de blocage (4c) vers leur position de blocage.

4. Dispositif (1) selon l'une des revendications précédentes, dans lequel les parties de blocage (4c) sont agencées pour entraîner l'au moins un volet mobile (6) de sa seconde position vers sa première position.

5. Dispositif (1) selon l'une des revendications précédentes dans lequel les parties de blocage (4c) comprennent chacun au moins une portion (4d) inclinée par rapport à la direction de mouvement de l'au moins un volet mobile (6), et constituant une came pour une portion (6d) de l'au moins un volet mobile (6) constituant un suiveur de came mis au contact avec la came.

6. Dispositif (1) selon l'une des revendications précédentes dans lequel les parties de blocage (4c) comprennent chacun au moins une portion (4e) comprenant une surface venant au contact d'une surface de l'au moins un volet mobile (6) dans sa première position, et constituant une gâche de verrou pour une portion (6e) de l'au moins un volet mobile (6) constituant un pêne de verrou.

7. Dispositif (1) selon l'une des revendications précédentes dans lequel les moyens d'actionnement (4) sont mobiles en rotation autour d'un axe (4a).

8. Dispositif (1) selon l'une des revendications précédentes dans lequel l'au moins un volet (6) est mobile en translation.

9. Dispositif (1) selon l'une des revendications précédentes dans lequel l'extrémité (3a) des deux parties de contact (3) est biseautée dans le sens d'introduction du pistolet dans le goulot (2).

10. Dispositif (1) selon l'une des revendications précédentes comportant deux volets mobiles (6), le premier et le second moyen d'actionnement (4) comportant une partie de blocage (4c) coopérant avec le premier et le second volet mobile (6), la partie de blocage (4c) étant mobile entre une position de blocage du premier et du second volet mobile (6) dans la première position de ceux-ci lorsque la partie de contact (3) n'est pas sollicitée par un pistolet distributeur, et une position de déblocage du premier et du second volet mobile (6) lorsque la partie de contact (3) est sollicitée par un pistolet distributeur, le mouvement du premier et du second volet mobile (6) vers leur seconde position étant autorisé seulement lorsque la partie de blocage (4c) du premier moyen d'actionnement (4) et la partie de blocage (4c) du second moyen d'actionnement (4) sont en position de déblocage du premier et du second volet mobile (6).
